# EUROPÄISCHE PATENTSCHRIFT

(11) **EP 0 663 877 B1**
(45) Veröffentlichungstag und Bekanntmachung des Hinweises auf die Patenterteilung: **22.05.1996**
(21) Anmeldenummer: 93921824.4
(22) Anmeldetag: 13.10.1993
(51) Int. Cl.: B61F 5/10, B60G 17/015, B60T 17/02

(54) **NIVEAU- UND NEIGUNGSSTEUERUNG EINES WAGENKASTENS**
HEIGHT AND INCLINATION CONTROL OF A WAGON BODY
COMMANDE DE NIVEAU ET D'INCLINAISON D'UNE CAISSE DE WAGON

(30) Priorität: 13.10.1992 DE 4234523
(43) Veröffentlichungstag der Anmeldung: 26.07.1995
(73) Patentinhaber: KNORR-BREMSE AG, 80809 München (DE)
(72) Erfinder: HÖLZL, Stefan, D-81669 München (DE); HOMMEN, Winfried, D-81669 München (DE); OBERTHÜR, Ralf-Christian, D-81375 München (DE); STÄUBLE, Georg, D-80997 München (DE)
(86) Internationale Anmeldenummer: DE9300980
(87) Internationale Veröffentlichungsnummer: WO9408833

(56) Entgegenhaltungen:
- EP-A- 0 530 755
- WO-A-89/11991
- DE-A- 3 833 922
- FR-A- 2 213 175
- FR-A- 2 215 653
- PATENT ABSTRACTS OF JAPAN vol. 16, no. 72 (M-1213)1992 & JP,A,03 262 720 (HINO MOTORS LTD) 22. November 1991

## Beschreibung

Die vorliegende Erfindung befaßt sich mit einer Niveau- und Neigungssteuerung eines Wagenkastens, insbesondere eines Wagenkastens eines Schienenfahrzeugs, mit einem spurgebundenen Drehgestell, das zusätzlich zu einer Stahlfederung mit einer hydropneumatischen Federung oder allein mit einer hydropneumatischen Federung abgefedert ist.

Derartige hydropneumatische Federungen sind aus der deutschen Offenlegungsschrift DE-OS 38 33 922 bekannt. Die aus dieser Druckschrift bekannte niveauregelnde Abfederung weist in jedem seiner Drehgestelle eine hydraulische Druckversorgungseinheit auf, aus welcher zueinander parallel über Drucksicherungsventile sowohl die hydraulische Bremse als auch die hydropneumatische Abfederung des jeweiligen Drehgestells druckversorgt sind. Die Rücklaufleitungen der elektrohydraulischen Bremse bzw. der hydropneumatischen Federung führen zu einem drucklosen Hydrauliktank. Hierbei werden für die Niveauregelung benötigte Ölvolumen grundsätzlich einem Speicher entnommen. Dieser Speicher wird nach teilweiser Entleerung bei Bedarf wieder aufgefüllt und zwar dann, wenn der Speicherdruck unter einen festgelegten Wert gefallen ist. Dieses Verfahren bewirkt, daß die Pumpe immer gegen den Vorrats-Speicherdruck arbeiten muß, der jedoch stets über dem Druck in der Federung liegt. Somit ist der Energiebedarf bei dieser Art der Niveauregelung verhältnismäßig hoch, so daß es notwendig erscheint, diesen Energieverbrauch zu reduzieren.

Hydropneumatische Federungen werden derzeit hauptsächlich in Kraftfahrzeugen verwendet. Die dort eingesetzten HP-Federungssysteme besitzen üblicherweise eine mechanische Niveauregelung. Die Druckversorgung der Anlagen erfolgt meist über eine zentrale Fahrzeughydraulik.

Bei Schienenfahrzeugen sind hydropneumatische Federungen bis heute noch sehr selten. Anlagen dieser Art müssen in spurgebundenen Fahrzeugen verschiedenen Bedingungen genügen. So muß die HP-Federung ein relativ großes Verhältnis der Fahrzeuggewichte (beladen/leer von ca. 1,5 - 3) beherrschen können. Das Fahrzeugniveau muß außerdem auch beim Fahrgastwechsel in Haltestellen annähernd konstant gehalten werden. Dies stellt hohe Ansprüche an die Geschwindigkeit des Niveaureglers. Außerdem müssen in kurzer Zeit große Ölmengen in die Hydraulikkreise der Federung eingespeist bzw. aus ihnen abgelassen werden. Ferner müssen die fahrdynamischen Einflüsse vom Regler erkannt werden, um ein Ansprechen des Reglers, z.B. bei Federbewegungen oder Kurvenfahren, zu verhindern.

Daher sollte der Energieverbrauch des Gesamtsystems verhältnismäßig gering sein, um einerseits die Baugröße der Hydrogeräte kleinzuhalten und andererseits das gesamte System aus der Batterie versorgen zu können.

Daher ist es Aufgabe der vorliegenden Erfindung, große Ölmengen in den Hydraulikkreisen in relativ kurzer Zeit zu bewegen, wobei der Energieverbrauch des Gesamtsystems möglichst gering ist und die Baugröße der Hydrogeräte klein ist.

Diese Aufgabe wird erfindungsgemäß mit den im Kennzeichen der unabhängigen Hauptansprüche befindlichen Merkmale gelöst.

Entsprechend dem Oberbegriff des unabhängigen Verfahrensanspruchs, wonach zur Steuerung des Niveaus und der Neigung eines Wagenkastens für Fahrzeuge, insbesondere für Schienenfahrzeuge mindestens ein hydropneumatisch geregeltes Federungs-Dämpfungs-System aufweisen sollte, das Sensoren beinhaltet, die sowohl das Niveau als auch die Neigung des Wagenkastens aufnehmen und die Signale der Sensoren einer elektrischen Regelung zugeführt werden, zeichnet sich dadurch aus, daß das System eine Pumpe aufweist, die unmittelbar gegen den Druck(p_{HPF})eines HPF-Druckspeichers des Federungs-Dämpfungs-Systems arbeitet und nur dann Druckmedium dem während der Fahrt aufgefüllten Speicher entnommen wird, wenn das Fördervolumen der Pumpe nicht ausreicht, um das Niveau des Wagenkastens konstant zu halten.

Die nach diesem Verfahren erfindungsgemäß ausgestaltete Vorrichtung ist dadurch gekennzeichnet, daß sie
- mindestens ein Federbein aufweist, das die vertikale Niveausteuerung bewirkt; und
- eine weitere Vorrichtung aufweist, die die horizontale Lage des Wagenkastens bestimmt;
- eine Pumpe aufweist, die parallel zu einem Speicher angeordnet ist; und
- die Pumpe und der Speicher so angeordnet sind, daß sie gegen einen an sich bekannten HP-Speicher arbeiten.

Weitere vorteilhafte erfindungsgemäße Ausgestaltungen sind den Unteransprüchen zu entnehmen.

Der in der vorliegenden Erfindung beschrittene Lösungsweg besteht aus mehreren Baugruppen, wie beispielsweise dem Federbein (FB) und dem HPF-Druckspeicher mit einem Düsenblock. Diese Baugruppen erfüllen sowohl die Funktion "Abfederung des Wagenkastens" als auch die Funktion "Dämpfung der Federbewegung".

Das Federbein ist oben am Wagenkasten und unten am Drehgestell bzw. am Laufwerk befestigt. Bei einer Federbewegung verdrängt der Kolben im Federbein ein bestimmtes Öl volumen, dieses Öl volumen arbeitet in dem mit dem Federbein verbundenen HPF-Speicher gegen ein Gaspolster. Das Gas ist durch eine Membrane vom Öl volumen getrennt und dient als federndes Element. Die Hydraulikflüssigkeit übernimmt die Funktion der Bewegungsübertragung. Diese Anordnung ist im Prinzip im Stand der Technik wohl bekannt.

Die Fahrzeugschwingungen, d.h. die Schwingungen des Wagenkastens werden Tauchschwingungen genannt und werden mit Hilfe der im Düsenblock untergebrachten Düsen bzw. einer Düse gedämpft.

Pro HPF-Kreis ist ein Niveaugeber vorhanden. Dieser Niveaugeber meldet die Höhenlage des Wagenkastens im Bereich des jeweils betrachteten HPF-Kreises an die Steuerelektronik. Diese steuert bei zu großer Abweichung des mittleren Wagenkastenniveaus von der Soll-Höhe die in Hydrogeräten untergebrachten Hydraulikventile so an, daß die zum Niveauausgleich benötigte Öl menge entweder von der Pumpe bzw. von Pumpe und Druckspeicher zu den HPF-Speichern gefördert oder aus den HPF-Speichern in den Tank abgelassen wird. Zur Sicherstellung der Niveauregelfunktion ist vorteilhaft jedem HP-Federkreis in der Regelelektronik ein eigener Dreipunktregler zugeordnet.

Ein HPF- bzw. Regelkreis der oben beschriebenen Form ist im Fahrzeug mehrfach vorhanden, wobei sich die Anzahl der Kreise nach der konstruktiven Ausführung des Fahrzeugs richtet. Somit besteht die Möglichkeit, das Niveau des Fahrzeugs an frei wählbaren Punkten unabhängig zu regeln. Es kann hierbei sinnvoll sein, mehrere Federbeine zu einem gemeinsamen Federungs- bzw. Niveauregelkreis zusammenzufassen.

Die Funktionsweise bei einem erfindungsgemäßen Verfahren ist wie folgt: Bei einer Lastzunahme wird das Gasvolumen in dem HPF-Speicher komprimiert. Bei Verzicht auf eine Niveauregelung hätte dies eine Absenkung des Wagenkastens zufolge. Um diese Absenkung zu vermeiden, muß die Verkleinerung des Gasvolumens durch die Einspeisung einer entsprechenden Menge an Hydraulikflüssigkeit ausgeglichen werden. Hingegen muß bei einer Verringerung der Fahrzeugbeladung (Gas im HPF-Speicher expandiert) die Vergößerung des Gasvolumens durch Ablassen von Hydraulikflüssigkeit aus dem Kreis ausgeglichen werden.

Die in der Niveauelektronik implementierte Logik unterscheidet grundsätzlich zwischen zwei verschiedenen Betriebszuständen, wie Stillstand des Fahrzeugs in der Haltestelle bei dem die Türen zur Öffnung freigegeben sind und bei dem eine Laständerung stattfinden kann, sowie dem Fahrbetrieb, bei dem in der Regel kein Fahrgastwechsel stattfindet. Je nach Betriebsart reagiert die Niveauregelung unterschiedlich auf die Signale der Niveaugeber.

Entsprechend dieser Regellogik wird erfindungsgemäß der Ölverbrauch der Anlage minimiert. Dadurch können die installierten Pumpen- bzw. Motorleistungen und die Baugrößen der Hydrogeräte kleingehalten werden.

Im nun Folgenden wird unter Bezugnahme auf die Zeichnungen die vorliegende Erfindung im Detail erläutert. Es zeigen
- Fig.1: eine Prinzipdarstellung der Sekundärfederung eines Fahrgestells in Draufsicht;
- Fig.2: den prinzipiellen Aufbau eines Kreises der HP-Federung;
- Fig.3: ein Funktionsschema einer erfindungsgemäßen HP-Federung;
- Fig.4: ein mögliches zeitabhängiges Lastprofil des Wagenkastens 1;
- Fig.5: ein erfindungsgemäßes Ausführungsbeispiel für die Ausrüstung eines Drehgestells bzw. Laufwerks mit hydropneumatischer Federung und elektro-hydraulischer Bremse.

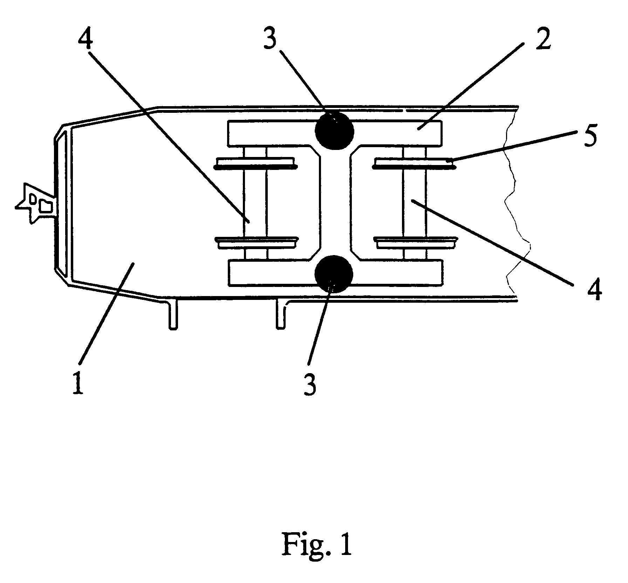

In Fig.1 ist der prinzipielle Aufbau einer Sekundärfederung eines Fahrgestells in Draufsicht dargestellt. Der Wagenkasten 1 befindet sich oberhalb des Fahrgestells 2, das im vorliegenden Fall aus zwei Radsätzen 4 mit jeweils zwei Rädern 5 besteht. Die Radsätze 4 sind durch zwei Träger fest miteinander verbunden. Die für die vorliegende Erfindung interessanten Elemente sind die Federungen 3, die in diesem Falle in der Mitte des Fahrgestells 2 angeordnet sind. Die erfindungsgemäße hydropneumatische Federung kann als Sekundärfederung in Schienenfahrzeugen eingebaut werden und ist als Ersatz für herkömmliche Stahl- und Luftfederungen geeignet. Der Stahlfeder ist sie im Fahrkomfort und durch die Sicherstellung eines konstanten Fahrzeugniveaus überlegen, und gegenüber der Luftfederung bietet sie Vorteile hinsichtlich des Platzbedarfs, der Regelgeschwindigkeit und dadurch, daß bei Verwendung einer elektro-hydraulischen Bremse kein zweites Druckmedium benötigt wird. Ein weiterer Vorteil kann darin gesehen werden, daß bei der erfindungsgemäßen Ausführungsform u.U. die vertikal und horizontal wirkenden Dämpfer entfallen können. Die hydropneumatische Federung wird im Prinzip durch ein oder zwei Federbeine pro Seite, denen unter Umständen noch Stahl federn parallel geschaltet sein können, realisiert. Die Federbeine 12 werden untereinander gekoppelt, so daß die linke Federung mit der rechten Federung 3 hydraulisch verbunden ist.

Denkbar wäre auch eine Ausführung der Federung 3 derart, daß jede Fahrzeugseite einen eigenständigen Hydraulik-Kreis aufweist, so daß die rechte Federung von der linken Federung hydraulisch getrennt ist. Die Federung 3 stellt im Prinzip ein System dar, daß prinzipiell sowohl in vertikaler als auch in horizontal er Richtung Einfluß auf die Lage des Wagenkastens 1 nehmen kann. Für den Fall der horizontalen Einwirkung wird eine Querfederung in dem vertikal wirkenden Federbein 12 integriert oder zusätzlich angebracht.

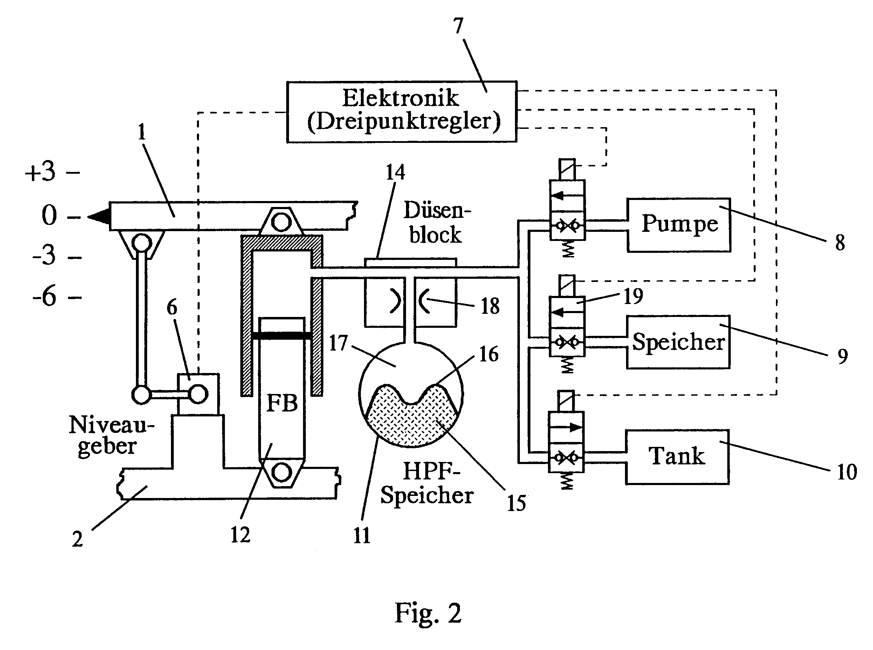

Das Funktionsprinzip eines erfindungsgemäßen hydropneumatischen Federungssystems ist in der Fig.2 schematisch dargestellt. Die Federung besteht aus den Baugruppen Federbein 12 (FB) und dem HPF-Druckspeicher 11 mit einem darüber angeordneten Düsenblock 14. Diese Baugruppen erfüllen die Funktion der Abfederung des Wagenkastens 1 und ebenso die Funktion der Dämpfung der Federbewegungen.

Das Federbein 12 ist oben am Wagenkasten 1, und am Drehgestell 2 bzw. am Laufwerk befestigt. Bei dieser Federbewegung verdrängt der Kolben im Federbein ein bestimmtes Öl volumen. Dieses Öl volumen arbeitet in dem mit dem Federbein verbundenen HPF-Druckspeicher 11 gegen ein Gaspolster 15, das durch eine Membrane 16 vom Ölvolumen 17 getrennt wird und somit als federndes Element dient. Damit überträgt die Hydraulikflüssigkeit die Kraftübertragung. Die Fahrzeugschwingungen (Wagenkasten-Tauchschwingungen) werden mit Hilfe der im Düsenblock 14 untergebrachten Düsen 18 gedämpft.

Pro HPF-Kreis ist ein Niveaugeber 6 vorgesehen. Dieser Niveaugeber 6 meldet die Höhenlage des Wagenkastens 1 im Bereich des jeweils betrachteten HPF-Kreises an die Steuerelektronik 7. Diese steuert bei zu großer Abweichung des mittleren Wagenkastenniveaus von der Soll-Höhe die in Hydrogeräten untergebrachten Hydraulikventile so, daß die zum Niveauausgleich benötigte Ölmenge entweder von der Pumpe 8 bzw. von Pumpe 8 und Druckspeicher 9 zu den HPF-Druckspeichern 11 gefördert oder aus dem HPF-Druckspeicher in den Tank 10 abgelassen wird. Zur Sicherstellung der Niveauregelfunktion ist jedem HP-Federkreis in der Regelelektronik 7 ein eigener Dreipunktregler zugeordnet.

Ein HPF-Regelkreis der oben beschriebenen Art ist im Fahrzeug vorhanden, wobei sich die Anzahl der Kreise nach der konstruktiven Ausführung des Fahrzeugs richten sollte. Somit besteht die Möglichkeit, das Niveau des Wagenkastens 1 an frei wählbaren Punkten unabhängig voneinander zu regeln. Es kann hierbei sinnvoll erscheinen, mehrere Federbeine zu einem gemeinsamen Federungs- bzw. Niveauregelkreis zusammenzufassen.

Im nun folgenden wird allgemein die Funktionsweise der Niveauregelung näher erläutert. Bei einer Lastzunahme wird das Gasvolumen 15 in den HPF-Speichern 11 komprimiert. Ohne eine Niveauregelung hätte dies eine Absenkung des Wagenkastens 1 zur Folge. Um diese Absenkung zu vermeiden, muß die Verkleinerung des Gasvolumens durch die Einspeisung einer entsprechenden Menge an Hydraulikflüssigkeit 17 kompensiert werden. Hingegen muß bei einer Verringerung der Fahrzeugbeladung (Gas im HPF-Speicher expandiert) die Vergroßerung des Gasvolumens durch Ablassen von Hydraulikflüssigkeit 17 aus dem Kreis ausgeglichen werden.

Die in der Niveauregelelektronik 7 implementierte Logik unterscheidet grundsätzlich zwischen zwei verschiedenen Betriebszuständen. Der erste Betriebszustand ist der Stillstand des Fahrzeuges in der Haltestelle, bei dem die Türen zur Öffnung freigegeben sind und bei dem eine Laständerung stattfinden kann. Der zweite Betriebszustand ist der Fahrbetrieb, bei dem kein Fahrgastwechsel stattfindet. Je nach Betriebszustand reagiert die Niveauregelung unterschiedlich auf die Signale der Niveaugeber 6. Das Ausregeln von Niveauänderungen geschieht bei Stillstand des Fahrzeuges ständig und ohne Zeitverzögerung. Dies bedeutet, daß das Fahrzeugniveau auch dann annähernd konstant bleibt, wenn in einer Haltestelle Fahrgäste ein- oder aussteigen.

Das System wird in der Regel so ausgelegt, daß sich der Wagenkasten 1 auch bei einer Laständerung von leer auf vollbeladen, die in ca. 30 Sekunden stattfindet, vorübergehend nicht mehr als ca. 6 mm abgesenkt.

Im Stillstand werden folgende Lastwechselvorgänge von der Niveauregelung unterschieden. Bei langsam verlaufender Lastzunahme, d.h., wenn in der dem betrachteten Zeitraum nur wenige Fahrgäste zusteigen, wird die zum Niveauhalten benötigte Ölmenge 17 von der Hydraulikpumpe 8 bereitgestellt. Diese Pumpe ist im Hydrogerät des Versorgungsteils untergebracht und wird von einem nicht gezeigten Elektromotor angetrieben, sobald bei Stillstand des Fahrzeuges in der Haltestelle eine Absenkung des Wagenkastens um mehr als ca. ΔX = 3 mm registriert wird.

Bei schnell verlaufender Lastzunahme, d.h., wenn in einer Haltestelle in kurzer Zeit viele Fahrgäste zusteigen, reicht in der Regel die Pumpenförderleistung allein nicht mehr aus, um das Fahrzeug auf der Soll-Höhe zu halten. In diesem Falle wird das fehlende Ölvolumen aus dem Druckspeicher 9 bezogen. Diese Zuschaltung des Druckspeichers 9 geschieht dann, wenn sich der Wagenkasten 1 in der Haltestelle um etwa 6 mm abgesenkt hat.

Bei Verringerung der Last, d.h., wenn Fahrgäste aussteigen, wird über ein Ventil ein gewisses Ölvolumen aus den HPF-Speichern 11 in den Tank 10 des Hydrogerätes abgelassen, sobald sich der Wagenkasten 1 um mehr als ca. 3 mm über das Normalniveau anhebt.

Durch die Tatsache, daß der Druckspeicher 9 nur bei schnellverlaufenden Laständerungen zugeschaltet wird, kann das Speichervolumen relativ klein bleiben.
Die Pumpe 8, der Speicher 9 und der Tank 10 sind im Hydrogerät miteinander verbunden.

Der Speicher wird zwischen den Haltestellen von der Pumpe wieder aufgefüllt. Für diesen Vorgang steht der Pumpe 8 also ein relativ großer Zeitraum zur Verfügung. Dies ermöglicht die Verwendung von Motor-Pumpenkombinationen, die nur einen geringen Bedarf an elektrischer Leistung aufweisen.

Während der Fahrt kann das mittlere Fahrzeugniveau ständig überwacht werden. Ein Ausgleichsvorgang findet bei der Fahrt aber nur dann statt, wenn eine unzulässig große Abweichung der mittleren Ist-Höhe von der Soll-Höhe des Fahrzeugs registriert wird. Die Berechnung einer mittleren Ist-Höhe hindert die Regelung an dem Versuch, dynamische Höhenänderung des Fahrzeugs beim Überfahren von Schienen Unebenheiten auszugleichen.

Bewegungen des Wagenkastens 1, die auf Kurvenfahrten, Bremsen und Anfahren oder auf Winddruck verursacht werden, werden mit Hilfe des Federbeins 12 und evtl. mit Hilfe einer zusätzlichen Querfederung, die entweder im Federbein 12 oder außerhalb dieses Federbeins 12 angeordnet ist, ausgeglichen bzw. geregelt.

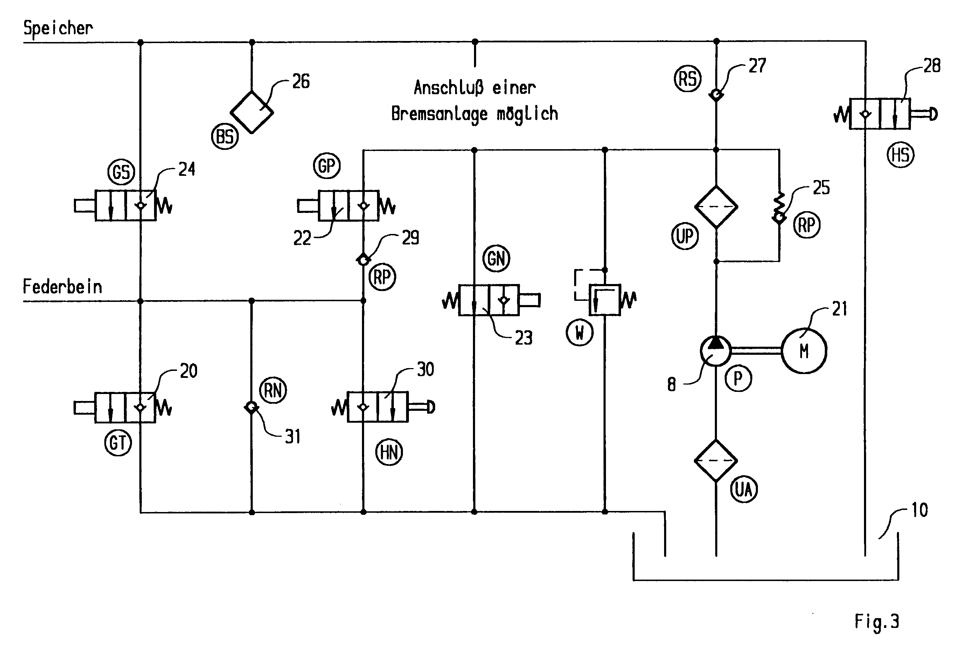

Ein Beispiel für die technische Realisierung eines HPF-Kreises ist schematisch in Fig.3 mit Hilfe eines hydraulischen Schaltbildes dargestellt. Für den Fall, daß der Wagenkasten 1 sich im Stillstand um mehr als 3 mm von der Null-Lage aus nach oben bewegt, wird das Ablaßventil (GT) 20 geöffnet und solange in dieser Stellung gehalten, bis der Wagenkasten 1 wieder die Grenze + 3 mm erreicht hat.

Befindet sich der Wagenkasten 1 in einem Toleranzfeld von ± 3 mm um die ideale Soll-Höhe des Fahrzeugs, bleiben alle Ventile und der Motor (M) 21 stromlos. Eine Ausnahme gilt dann, wenn der Motor in diesem Zustand bereits läuft. In diesem Falle schaltet der Motor erst mit einer Zeitverzögerung von ca. 15 Sekunden ab.

Ein weiterer Zustand liegt dann vor, wenn der Wagenkasten 1 vom Sollniveau aus weiter als 3 mm absinkt, jedoch noch innerhalb der 6 mm-Grenze bleibt. In diesem Falle wird der Motor 21 eingeschaltet, das Kurzschlußventil (GN) 23 geschlossen und das Ventil (GP) 22 geöffnet. Die Pumpe 8 fördert dann Öl über das Ventil (GP) 22 in den Federungskreis und versucht so, das Niveau wieder in das 3 mm-Toleranzfeld um die Wagenkasten-Soll-Lage zu bringen.

Ein weiterer Zustand tritt dann ein, wenn der Wagenkasten 1 mehr als 6 mm vom Null-Niveau aus abgesunken ist, weil die Pumpenförderleistung nicht ausgereicht hat, die Lastzunahme zu kompensieren. In diesem Falle öffnet zusätzlich zum Ventil (GP) 22 das Ventil (GS) 24, um Ölvolumen aus dem Speicher 9 in den Federungskreis einzuschießen. Das Ventil (GS) 24 schließt, sobald der Wagenkasten 1 wieder auf eine Höhe von 6 mm unter der Null-Lage angehoben ist.

Im Fahrbetrieb kann mittels eines geeigneten Algorithmus die mittlere Fahrzeughöhe während der Fahrt festgestellt werden. Diese mittlere Fahrzeughöhe dient als Eingangsgröße und der Regel vorgang läuft dann nach dem nun folgenden Schema ab.

Die Berechnung einer mittleren Ist-Höhe hindert die Regelung an dem Versuch, dynamische Höhenänderungen des Fahrzeugs beim Überfahren von Schienenunebenheiten auszugleichen, wie bereits w.o. erwähnt wurde. Allerdings können so quasistatische Niveauänderungen aufgrund von Leckraten oder aufgrund von thermischer Einflüsse ausgeregelt werden.

Im Gegensatz zur Regelung im Stillstand verwendet der Regler bei der Fahrt nur ein "Fenster", das durch eine Abweichung von der Soll-Höhe des Wagenkastens nach oben und unten von jeweils 6 mm festgelegt wird.

Wird die Betätigung eines Ventils während der Fahrt nötig, so wird dieses Ventil für einen definierten Zeitraum (z.B. 100 ms) geöffnet. Ein Schließen der Ventile in Abhängigkeit von der exaten Momentanhöhe wie bei der Regelung im Stillstand, findet hier nicht statt.

Außerdem ist zu beachten, daß die Logik für die Niveauregulierung während der Fahrt den Motor 21 das Pumpenventil (GP) 22 und das Kurzschlußventil (GN) 23 nicht ansteuert. Die Regulierung der Ölmenge 17 in den Federbeinen 12 erfolgt ausschließlich über das Auslaßventil (GT) 20 und das Speicherventil (GS) 24. Der Pumpenmotor 21 wird also im Fahrbetrieb nicht von den Signalen der Niveaugeber beeinflußt, sondern läuft nur dann an, wenn dies von der Speicherdrucküberwachung gefordert wird.

Ein besonderes Problem im Fahrbetrieb stellt eine lang andauernde Kurvenfahrt dar. Diese muß von der Regellogik erfaßt werden können, um zu vermeiden, daß bei einer in der Kurve auftretenden Wankbewegung ein Niveauunterschied zwischen rechter und linker Fahrzeugseite registriert und ausgeregelt wird. Dies hätte eine Schiefstellung des Fahrzeugs nach Beendigung der Kurvenfahrt zur Folge.

Demgegenüber muß natürlich eine quasistatische einseitige Absenkung bzw. Anhebung des Fahrzeugs erkannt und korrigiert werden.

Die Regellogik unterscheidet die beiden Vorgänge auf folgende Art und Weise: Wird nach Ablauf des Zeittakts (z.B. 10 Sekunden) ein Niveauunterschied zwischen rechter und linker Fahrzeugseite erkannt, so wird diese Messung zunächst ignoriert und angenommen, daß eine Kurve befahren wurde.

Ist jedoch nach Ablauf eines weiteren Zeittaktes auf beiden Fahrzeugseiten noch nicht wieder die Soll-Höhe vorhanden, so wird diese Niveauabweichung von der Regelung ausgeglichen.

Die Umschaltung zwischen Stand- und Fahrtregelung kann beispielsweise in Abhängigkeit von dem Signal der Haltbremse gesehen werden. Ist die Haltebremse eingelegt, so wird das Fahrzeugniveau nach der Logik für die Standregelung korrigiert, wobei bei gelöster Haltebremse die Elektronik nach der Logik für Fahrt geregelt wird. Eine weitere Möglichkeit wird darin gesehen, die absolute Fahrgeschwindigkeit des Fahrzeugs als Kriterium zu verwenden. Die weiteren in der Schaltung befindlichen Funktionselemente sind der Druckgeber (BS) 26, der den Speicherdruck der Regelelektronik zuführt, das Rückschlagventil (RS) 27, das verhindert, den Speicher 9 bei stehendem Motor 21 zu entleeren, jedoch das Füllen des Speichers zuläßt, sofern die Ventile (GP) 22 und (GN) 23 geschlossen sind. Ferner ermöglicht das Handventil (HS) 28 das Ablassen des Speicherdrucks, z.B. für Wartungsarbeiten, und das Rückschlagventil (RP) 29 verhindert den Druckverlust des HPF-Kreises bei stehendem Motor 21. Das Handventil HN 30 ermöglicht das Ablassen des Druckes im HPF-Kreis, z.B. für Wartungsarbeiten, und das Rückschlagventil RN 31 ermöglicht das Ansaugen von Öl aus dem drucklosen Tank 10. Die Symbole (UP) und (UA) stellen lediglich Filter dar, während W ein Drucksicherungsventil ist. Das Rückschlagventil 25 wird bei Verstopfung des Filters (UP) wirksam.

Ferner sind weitere mögliche Zusatzfunktionen, die beispielsweise die Realisierung einer sogenannten Kneeling-Funktion ermöglichen, zu realsieren.

Bei Schienenfahrzeugen ist die Federung in Querrichtung, d.h. in horizontaler Ebene, besonders zu beachten. Die Einrichtungen, die der Querfederung dienen, können entweder mit der Vertikal-Federung kombiniert oder von dieser getrennt sein, wie bereits weiter oben erwähnt wurde.

Ein Beispiel für eine kombinierte Vertikal- und Querfederung ist die Luftfeder oder eine Stahlfeder die das "Flexi-Float-Prinzip" verwendet. Dagegen wird bei Verwendung eines Wiegenpendels mit Stahl federn die Querfederung durch die Pendel, die Vertikal-Federung durch die Stahl federn realisiert. Bei der hydropneumatischen Federung sind beide Varianten möglich.

Für den Fall, daß die Querfeder im Federbein 12 integriert ist, wird diese durch eine Rückstellvorrichtung im unteren Lager des Federbeins realisiert. Dieses untere Lager besteht in diesem Falle aus einer Kugel, deren Mittelpunkt über den Angriffspunkt des Wagenkastengewichts, also über dem oberen Lager des Federbeins liegt.

Für den Fall, daß die Querfederung extern angeordnet ist, wird zusätzlich zum vertikal wirksamen Federbein ein im wesentlichen waagerecht angeordnetes Federbein herangezogen. Der Aufbau dieses Federbeins ist ähnlich dem bereits oben beschriebenen Vertikal-Federbein 12. Ferner ist ein Horizontalausgleich auch durch ein passives Federelement, wie Gummi- oder Stahlfeder zu realisieren.

Die Regelung der horizontalen Position des Wagenkastens erfolgt über einen Lageregelkreis, der auf die gleiche Weise angesteuert wird wie die in Fig.2 dargestellte Vertikal-Niveauregelung. Das Quer-Federbein kann für Zusatzfunktionen verwendet werden, wie beispielsweise zum seitlichen Andrücken des Wagenkastens an die Bordsteinkante. Denkbar ist auch eine Kombination aus interner und externer Querfederung.

Über einen Sensor oder direkt über die entsprechenden Kontakte der Fahr- und Bremssteuerung kann festgestellt werden, ob das Fahrzeug beschleunigt oder abgebremst wird. Aufgrund dieser Information kann die Niveauregelung so angesteuert werden, daß das Eintauchen des Fahrzeugs bei Anfahr- oder Bremsvorgängen kompensiert wird. Somit ist die Niveauregelung zu einer Wagenkasten-Neigungssteuerung erweitert. Diese Vorrichtung neigt in schnell gefahrenen Kurven, die eine zu geringe oder gar keine Überhöhung aufweisen, den Wagenkasten 1 um einen bestimmten Betrag zur Innenseite der Kurve. Die Wagenkastenneigung ist so gemessen, daß für die Fahrgäste die Auswirkung der Zentrifugalkraft nicht spürbar wird. Diese Funktion wird mit den vorhandenen Bauelementen realisiert. Lediglich die Logik der implementierten Software ist zu ergänzen.

Ferner kann die hydropneumatische Federung in der oben beschriebenen Wagenkasten-Neigungssteuerung kombiniert werden mit einer Radialeinstellung der Radsätze in Abhängigkeit von der Fahrgeschwindigkeit und dem Druckunterschied zwischen dem Federbein 12 auf der Kurveninnen- und der Kurvenaußenseite. Somit wird der Anlaufwinkel des Spurkranzes an der Schiene kleiner, wodurch der Verschleiß und die Geräusche reduziert werden können.

Die Höheneinstellung des Wagenkastens 1 ist während der Fahrt auf Grund der Höheninformation der Bahnsteig-Sensoren oder über ein IBIS (Integriertes-Bord-Info-System) vorzunehmen.

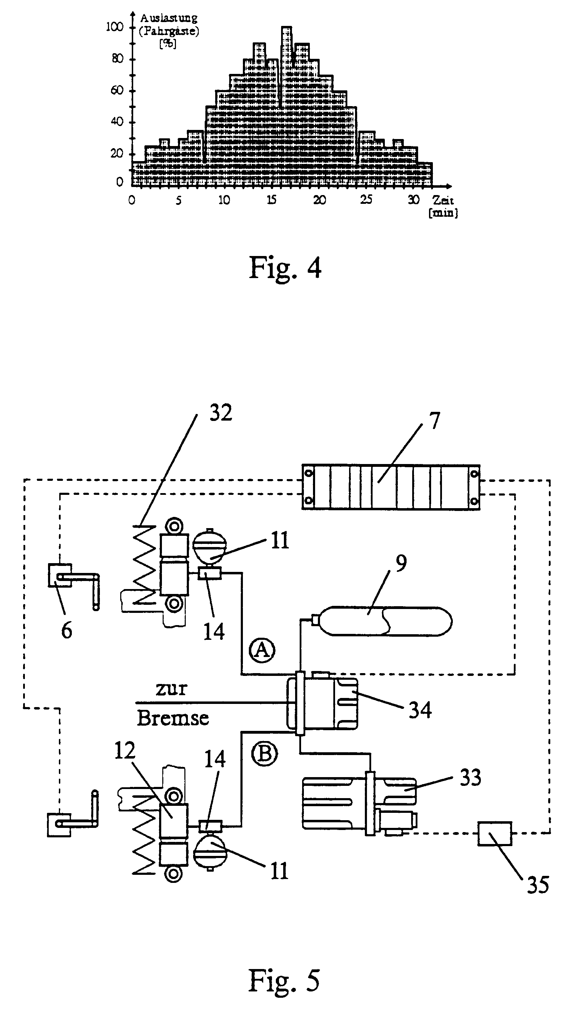

In Fig.4 ist ein Beispiel für ein vorgegebenes Lastprofil des Fahrzeugs wiedergegeben. Senkrecht in diesem Diagramm ist die Auslastung der Fahrgäste in Prozent aufgetragen und waagerecht die Zeit in Minuten. Die "Spitzen", die bei möglichen Lastwechseln auftreten, kennzeichnen Haltestellen, an denen eine große Anzahl von Fahrgästen aussteigt, aber sofort danach auch viele Passagiere einsteigen. Da auch in dieser Situation das Fahrzeugniveau in etwa gehalten werden soll, muß hier eine große Menge zunächst aus dem HPF-Speicher 11 abgelassen und gleich anschließend wieder eingespeist werden. Solche Haltestellen bedeuten also eine erhöhte Belastung für die Anlage.

In Fig.5 ist ein Beispiel für eine Drehgestellausrüstung schematisch dargestellt. Bei dem in Fig.5 dargestellten Beispiel sind zwei unabhängige Feder- bzw. Niveauregelkreise (A) und (B) realisiert, die beide ihren eigenen Niveaugeber 6 besitzen. An jedem HPF-Kreis ist ein Federbein 12 mit zugehörigem HPF-Speicher und Düsenblock 14 angeschlossen. Das System ist teiltragend. Pro Federbein 12 ist eine parallel geschaltete Stahlfeder 32 vorhanden.

Zur Druckversorgung und Ansteuerung der Anlage dienen zwei Hydrogeräte, der Versorgungseinheit 33 und dem Steuergerät 34, die auch zu einem Gerät zusammengefaßt sein können. Zusätzlich zu den beiden HPF-Kreisen ist am Steuergerät 34 ein Druckspeicher 9 angeschlossen. Daneben wird von dem Steuergerät 34 die nicht weiter gezeigte Bremsanlage gespeist. Darüberhinaus ist auch eine Trennung der Geräte zwischen Federungseinheit und Bremseinheit möglich. Zur Regelung der Anlage dient eine elektronische Steuereinheit 7, die die Niveaugebersignale empfängt, auswertet und die beiden Hydrogeräte 33 und 34 ansteuert. Die Steuerung des Motors in der Versorgungseinheit 33 erfolgt über ein Motorschütz 35.

### Bezugszeichenliste

- 1: Wagenkasten
- 2: Fahrgestell
- 3: Federung
- 4: Radsatz
- 5: Räder
- 6: Niveaugeber
- 7: Elektronik
- 8: Pumpe
- 9: Druckspeicher
- 10: Tank, drucklos.
- 11: HPF-Speicher
- 12: Federbein
- 13:
- 14: Düsenblock
- 15: Gasblase
- 16: Membrane
- 17: Druckmedium
- 18: Düse
- 19: Rückschlagventil
- 20: Ventil
- 21: Motor
- 22: Ventil
- 23: Ventil
- 24: Ventil
- 25: Rückschlagventil
- 26: Druckgeber
- 27: Rückschlagventil
- 28: Handventil
- 29: Rückschlagventil
- 30: Handventil
- 31: Rückschlagventil
- 32: Feder
- 33: Versorgungseinheit
- 34: Steuereinheit
- 35: Motorschütz

## Patentansprüche

1. Verfahren zur Steuerung des Niveaus und der Neigung eines Wagenkastens (1) für Fahrzeuge, insbesondere Schienenfahrzeuge, mit mindestens einem hydropneumatisch geregelten Federungs-Dämpfungs-System mit einem Versorgungsspeicher (9) für ein Druckmedium, wobei Sensoren (6) sowohl das Niveau als auch die Neigung des Wagenkastens (1) aufnehmen und die Signale der Sensoren (6) vorzugsweise einer elektronischen Regelung (7) zugeführt werden, dadurch gekennzeichnet, daß eine Pumpe (8) unmittelbar gegen den hydropneumatischen Federdruck (P_{HPF}) eines hydropneumatischen Federspeichers (11) des Federungs-Dämpfungssystem arbeitet und nur dann Druckmedium dem während der Fahrt aufgefüllten Versorgungsspeicher (9) entnommen wird, wenn das Fördervolumen der Pumpe (8) nicht ausreicht, um das Niveau des Wagenkastens (1) konstant zu halten.

2. Verfahren nach Anspruch 1, dadurch gekennzeichnet, daß nach Überschreitung eines kleineren unteren Schwellwertes der Höhe des Wagenkastens (1) das Federbein (12) und der HPF-Speicher (11) nur von der Pumpe (8) gespeist werden.

3. Verfahren nach Anspruch 1, dadurch gekennzeichnet, daß bei Überschreiten des größeren unteren Schwellwertes der Höhe des Wagenkasten (1) des Reglers das Federbein (12) und der HPF-Speicher (11) von der Pumpe (8) und dem Versorgungsspeicher (9) gespeist werden.

4. Verfahren nach Anspruch 1, dadurch gekennzeichnet, daß nach einem Regelvorgang in einer Haltestelle bei unveränderter Last die Pumpe mit einem Magnetventil (GN) (23) auf Leerlauf geschaltet wird.

5. Verfahren nach Anspruch 1, dadurch gekennzeichnet, daß das Auffüllen des Versorgungsspeichers (9) über ein Rückschlagventil (27) erfolgt.

6. Verfahren nach Anspruch 1, dadurch gekennzeichnet, daß zum Umschalten zwischen dem Zustand "HPF-Kreis füllen" und dem Zustand "Speicherfüllen" nur ein Magnetventil (22) (GP) verwendet wird.

7. Verfahren nach Anspruch 1, dadurch gekennzeichnet, daß zum Umschalten von "Leerlauf" auf "Speicher" oder "HPF-Kreis füllen" ein Ventil (23) (GN) verwendet wird.

8. Verfahren nach Anspruch 1, dadurch gekennzeichnet, daß die Regellogik während der Fahrt die mittlere Fahrbahnhöhe derart feststellt, daß bei der Mittelwertbildung die Einflüsse der Fahrdynamik keinen Einfluß auf den Regelvorgang ausüben.

9. Verfahren nach einem der vorstehenden Ansprüche, dadurch gekennzeichnet, daß dem System eine Querfederung zugeordnet ist, die in das vertikal wirksame Federbein (12) integriert ist.

10. Verfahren nach Anspruch 9, dadurch gekennzeichnet, daß dem System ein zusätzliches horizontal wirksames Federbein (12) zugeordnet wird.

11. Verfahren nach Anspruch 9, dadurch gekennzeichnet, daß die Querfederung aus einer Kombination aus integriertem und zusätzlichem Federbein (12) zur Querfederung besteht.

12. Verfahren nach Anspruch 9, dadurch gekennzeichnet, daß das System zwei Regelkreise für die horizontale und vertikale Positionierung des Wagenkastens (1) aufweist.

13. Verfahren nach einem der vorstehenden Ansprüche, dadurch gekennzeichnet, daß ein Sensor verwendet wird, der Beschleunigungs- und Bremsvorgänge aufnimmt und die Signale der vorzugsweise elektronischen Regelung (7) zuführt.

14. Verfahren nach Anspruch 9, dadurch gekennzeichnet, daß die Wagenkasten-Neigungssteuerung mit einer Radialeinstellung der Radsätze (4) kombiniert wird.

15. Verfahren nach Anspruch 9, dadurch gekennzeichnet, daß ein zusätzlicher HP-Federungs-Speicher dem System zugeschaltet wird, um die Federung der Fahrgeschwindigkeit anzupassen.

16. Vorrichtung zur Durchführung des Verfahrens nach einem der vorstehenden Ansprüche, mit
- mindestens einem hydropneumatisch geregelten Federungs-Dämpfungs-System;
- Sensoren (6), die sowohl das Niveau als auch die Neigung des Wagenkastens (1) aufnehmen und die Signale der Sensoren (6) einer elektronischen Regelung (7) zuführen,
- mindestens einem Versorgungsdruckspeicher (9) für ein Druckmedium;
- mindestens einem Federbein (12), das die vertikale Niveausteuerung bewirkt; gekennzeichnet durch
- eine Vorrichtung, welche die horizontale Lage des Wagenkastens (1) bestimmt;
- eine Pumpe (8), die parallel zu dem Versorgungsdruckspeicher (9) angeordnet ist; wobei
- die Pumpe (8) und der Versorgungsdruckspeicher (9) so angeordnet sind, daß sie gegen einen an sich bekannten HPF-Speicher (11) anarbeiten.

17. Vorrichtung nach Anspruch 16, dadurch gekennzeichnet, daß die elektronisch Regelung (7) aus einem Dreipunktregler besteht.

18. Vorrichtung nach Anspruch 16, dadurch gekennzeichnet, daß das HP-Federungs-Dämpfungs-System mit dem elektropneumatischen (EP)-System der Bremsanlage kombiniert ist.

## Claims

1. Process for controlling the height and inclination of a wagon body (1) for vehicles, particularly rail vehicles, with at least one hydropneumatically controlled suspension damping system with a supply reservoir (9) for a pressure medium, sensors detecting both the height and the inclination of the wagon body (1) and the signals from the sensors (6) being supplied preferably to an electronic control (7), characterised in that a pump (8) works directly against the hydropneumatic spring pressure (P_{HPF}) of a hydropneumatic spring store (11) of the suspension damping system and the pressure medium is only removed from the supply reservoir (9), which is topped up during the journey, when the displaced volume of the pump (8) is not sufficient to hold the height of the wagon body (1) constant.

2. Process according to claim 1, characterised in that after exceeding a smaller lower threshold value for the height of the wagon body (1) the shock-absorbing leg (12) and the hydropneumatic spring store (11) are only supplied by the pump (8).

3. Process according to claim 1, characterised in that on exceeding the larger lower threshold value for the height of the wagon body (1) by the controller the shock-absorber (12) and the hydropneumatic spring store (11) are supplied by the pump (8) and the supply reservoir (9).

4. Process according to claim 1, characterised in that after a control procedure at a stop with an unchanged load the pump is switched to idling with a solenoid valve (GN) (23).

5. Process according to claim 1, characterised in that the filling-up of the supply reservoir (9) is carried out by a nonreturn valve (27).

6. Process according to claim 1, characterised in that only a solenoid valve (22) (GP) is used to switch between the "fill-up hydropneumatic spring circuit" state and the "fill reservoir" state.

7. Process according to claim 1, characterised in that a valve (23) (GN) is used to switch from "idling" to "reservoir" or "fill hydropneumatic spring circuit".

8. Process according to claim 1, characterised in that during the journey the control logic establishes the average rail height in such a way that, by taking the mean, the influences of the dynamics of vehicle movement have no effect on the control procedure.

9. Process according to one of the previous claims, characterised in that a transverse suspension is assigned to the system, which is integrated in the vertically acting shock-absorber (12).

10. Process according to claim 9, characterised in that an additional horizontally acting shock-absorber (12) is assigned to the system.

11. Process according to claim 9, characterised in that the transverse suspension comprises a combination of an integrated and additional shock-absorber (12) for the transverse suspension.

12. Process according to claim 9, characterised in that the system has two control circuits for the horizontal and vertical positioning of the wagon body (1).

13. Process according to one of the previous claims, characterised in that a sensor is used which detects acceleration and braking and supplies the signals to the preferably electronic control (7).

14. Process according to claim 9, characterised in that the wagon body inclination control is combined with a radial adjustment of the wheel sets (4).

15. Process according to claim 9, characterised in that an additional hydropneumatic spring reservoir is connected to the system, in order to match the suspension to the travelling speed.

16. Device for implementing the process according to one of the previous claims, with
- at least one hydropneumatically controlled suspension damping system;
- sensors (6) which detect both the height and inclination of the wagon body (1) and feed the signals from the sensors (6) to an electronic control (7),
- at least one supply pressure reservoir (9) for a pressure medium;
- at least one shock-absorber (12), which effects the height control; characterised by
- a device which fixes the horizontal position of the wagon body (1);
- a pump (8), which is arranged parallel to the gas supply reservoir (9);
- the pump and the gas supply reservoir (9) being arranged in such a way that they work against a known hydropneumatic spring store (11).

17. Device according to claim 16, characterised in that the electronic control (17) comprises a three-term controller.

18. Device according to claim 16, characterised in that the hydropneumatic suspension damping system is combined with the electropneumatic (EP) system of the brake apparatus.

## Revendications

1. Procédé de commande du niveau et de l'inclinaison d'une caisse de voiture (1) pour véhicules, en particulier pour véhicules sur rails, à l'aide d'au moins un système d'amortissement à suspension à ressorts réglé hydropneumatiquement avec un réservoir d'alimentation (9) pour un fluide sous pression, des détecteurs (6) captant aussi bien le niveau que l'inclinaison de la caisse de voiture (1) et les signaux des détecteurs (6) étant amenés de préférence à une régulation électronique (7), caractérisé en ce qu'une pompe (8) agit directement contre la pression de ressort hydropneumatique (P_{HPF}) d'un ressort accumulateur hydropneumatique (11) du système d'amortissement à suspension à ressorts et du fluide sous pression n'est alors prélevé du réservoir d'alimentation (9) rempli pendant le trajet, que lorsque le volume déplacé de la pompe (8) ne suffit pas pour maintenir constant le niveau de la caisse de voiture (1).

2. Procédé selon la revendication 1, caractérisé en ce qu'après dépassement d'une valeur seuil inférieure moindre de la hauteur de la caisse de voiture (1), le montant de force à ressort (12) et le réservoir de pression de ressort hydropneumatique (11) ne sont alimentés que par la pompe (8).

3. Procédé selon la revendication 1, caractérisé en ce qu'après dépassement de la valeur seuil inférieure plus grande de la hauteur de la caisse de voiture (1) du régulateur, le montant de force à ressort (12) et le réservoir de pression de ressort hydropneumatique (11) sont alimentés par la pompe (8) et par le réservoir d'alimentation (9).

4. Procédé selon la revendication 1, caractérisé en ce qu'après une opération de réglage à un arrêt, la charge étant inchangée, la pompe est commutée sur marche à vide avec une électrovanne (GN) (23).

5. Procédé selon la revendication 1, caractérisé en ce que le remplissage du réservoir d'alimentation (9) se fait au travers d'un clapet antiretour (27).

6. Procédé selon la revendication 1, caractérisé en ce que, pour la commutation entre l'état "remplissage du circuit de pression de ressort hydropneumatique" et l'état "remplissage du réservoir", seule une électrovanne (22) (GP) est utilisée.

7. Procédé selon la revendication 1, caractérisé en ce que, pour la commutation de "marche à vide" a "réservoir" ou "remplissage du circuit de pression de ressort hydropneumatique", une vanne (23) (GN) est utilisée.

8. Procédé selon la revendication 1, caractérisé en ce que la logique de réglage établit, pendant le trajet, la hauteur moyenne de la voie de roulage de telle manière que, lors de la formation de la valeur moyenne, les influences de la dynamique du mouvement n'exercent aucune influence sur l'opération de réglage.

9. Procédé selon l'une des revendications précédentes, caractérisé en ce qu'une suspension à ressorts tranversale est adjointe au système, suspension qui est intégrée dans le montant de force à ressort (12) actif verticalement.

10. Procédé selon la revendication 9, caractérisé en ce qu'un montant de force à ressort (12) supplémentaire, actif horizontalement, est adjoint au système.

11. Procédé selon la revendication 9, caractérisé en ce que la suspension à ressorts transversale est constituée par une combinaison d'un montant de force à ressort intégré et d'un montant de force à ressort supplémentaire (12) en la suspension à ressorts transversale.

12. Procédé selon la revendication 9, caractérisé en ce que le système présente deux circuits de réglage pour le positionnement horizontal et vertical de la caisse de voiture (1).

13. Procédé selon l'une des revendications précédentes, caractérisé en qu'on utilise un détecteur qui capte les processus d'accélération et de freinage et qui amène les signaux à la régulation (7) qui, de préférence, est électronique.

14. Procédé selon la revendication 9, caractérisé en ce que la commande de l'inclinaison de la caisse de voiture est combinée à un réglage radial des paires de roues (4).

15. Procédé selon la revendication 9, caractérisé en ce qu'un réservoir supplémentaire de pression de ressort hydropneumatique est raccordé au système pour adapter la suspension à ressorts à la vitesse de marche.

16. Dispositif pour la mise en oeuvre du procédé selon l'une des revendications précédentes, comportant
- au moins un système d'amortissement à suspension à ressorts réglé hydropneumatiquement;
- des détecteurs (6) qui captent aussi bien le niveau que l'inclinaison de la caisse de voiture (1) et qui amènent les signaux des détecteurs (6) à une régulation électronique (7),
- au moins un réservoir de pression d'alimentation (9) pour un fluide sous pression;
- au moins un montant de force à ressort (12) qui effectue la commande verticale de niveau, caractérisé par
- un dispositif qui détermine la position horizontale de la caisse de voiture (1);
- une pompe (8) qui est placée parallèlement au réservoir de pression d'alimentation (9),
- la pompe (8) et le réservoir de pression d'alimentation (9) étant placés de telle manière qu'ils agissent contre un réservoir de pression de ressort hydropneumatique (11) connu en soi.

17. Dispositif selon la revendication 16, caractérisé en ce que la régulation électronique (7) est constituée par un régulateur par plus ou moins.

18. Dispositif selon la revendication 16, caractérisé en ce que le système d'amortissement à suspension à ressorts hydropneumatique est combiné au système électropneumatique de l'installation de freinage.
